# EUROPÄISCHE PATENTANMELDUNG

(11) **EP 0 729 708 A1**
(43) Veröffentlichungstag der Anmeldung: **04.09.1996**
(21) Anmeldenummer: 96102564.0
(22) Anmeldetag: 21.02.1996
(51) Int. Cl.: A23K 1/18, A23K 1/165

(54) **Verwendung von Enzymen von Krill in Futtermitteln**

(30) Priorität: 03.03.1995 CH 606/95
(71) Anmelder: F. HOFFMANN-LA ROCHE AG, 4002 Basel (CH)
(72) Erfinder: Spring, Wolfgang, 79639 Grenzach (DE)
(74) Vertreter: Kjellsaa-Berger, Hanny, Dr.

(57) **Zusammenfassung**

Die vorliegende Erfindung betrifft die Verwendung von Krill-Enzymen in Futtermitteln für aquatische Tiere, sowie Futtermittel enthaltend Krillenzyme für aquatische Tiere.

## Beschreibung

Die Erfindung betrifft die Verwendung von Enzymen aus Krill (*Euphausia superba)* in Futtermitteln für aquatische Tiere zur Verbesserung der Verdaulichkeit pflanzlicher Proteine, sowie Futtermittel enthaltend Krill-Enzyme für aquatische Tiere.

Der Einsatz von Enzymen in der Tierernährung hat in den letzten fünf Jahren stark zugenommen. Sie dienen hauptsächlich der Verbesserung der Verdaulichkeit von schlecht oder nicht verdaulichen Substanzen in Futtermitteln. Es handelt sich dabei um Carbohydroasen, Proteasen und Amylasen. Die derzeit zur Verbesserung der Verwertung von Nichtstärkepolysacchariden und Proteinen eingesetzten Enzyme werden über das Futter verabreicht. Oft haben sie jedoch den Nachteil, dass sie untereinander nicht kompatibel sind, d.h. speziell Proteasen zerstören vielfach andere Enzymaktivitäten. Da das Aktivitätsoptimum dieser Enzyme im physiologischen Bereich terrestrischer Nutztiere ( 37-40° Körpertemperatur) liegt, und sie bei Temperaturen unter 30°C drastisch an Aktivität verlieren, sind sie für den Einsatz bei aquatischen Tieren nicht geeignet.

Es stellte sich somit die Aufgabe, geeignete Enzyme für den Einsatz in Futtermitteln für aquatische Tiere zu finden.

Der antarktische Krill (*Euphausia superba*) hat einen aussergewöhnlich effizienten Verdauungsapparat, um einen schnellen Abbau der aufgenommenen Nährstoffe zu gewährleisten und ausreichend Lipidreserven während der kurzen Periode des antarktischen Sommers mit überreichem Nährstoffangebot zu speichern. Da sich der Krill vorwiegend von Plankton und Algen ernährt, muss sein Enzymsystem in der Lage sein, pflanzliche Proteine zu spalten und zu verwerten. D.h. die Enzyme müssen eine überaus hohe Konzentration bzw. Aktivität aufweisen, um auch bei den niedrigen Temperaturen im Lebensbereich des Krill voll wirksam sein.

Der antarktische Krill (*Euphausia superba*) enthält eine Reihe von Verdauungsenzymen, wie Exo- und Endopeptidasen, Carbohydrasen und Lipasen, die wegen ihrer einzigartigen Eigenschaften ein beachtliches Potential als Nährstoff-Umwandler bei ungenügender Pankreasversorgung haben. Krill enthält Carbohydrasen und eine grosse Menge Phospholipasen. Triglycerid-spaltende Lipasen wurden jedoch im wässrigen Extrakt der Tiere noch nicht entdeckt.

Im Rahmen der vorliegenden Erfindung wurde gefunden, dass bei experimenteller Behandlung von Futtermitteln mit Krill-Enzymen, einem natürlichen Gemisch von Proteasen und Phospholipasen, ein starker Abbau der vorhandenen Proteine beobachtet werden kann, und dass die Kompatibilität der Enzymaktivitäten sehr gross ist. Diese Eigenschaften der Krill-Enzyme führen nun dazu, dass vermehrt auch pflanzliche Proteine, die von den Fischen sonst nur in ungenügender Weise verwertet werden, für die Fischernährung eingesetzt werden kann. D.h. mit Hilfe der Krill-Enzyme ist es möglich, tierische Proteine (Fischmehl), die immer weniger verfügbar und teurer werden, durch pflanzliche Proteine (Leguminosen, Soya, usw.) zu ersetzen. Damit wird ein wesentlicher Fortschritt in der Verbesserung der Wirtschaftlichkeit der stark expandierenden Aquakultur-Industrie erzielt.

Die Erfindung betrifft somit die Verwendung von Krill-Enzymen in Futtermitteln für aquatische Tiere, insbesondere für carnivore Fische, wie beispielsweise Forellen, Lachs, Seebarsch, Steinbutt und dergleichen.

Durch die Zugabe von Krill-Enzymen kann die Zusammensetzung von Fischfutter verändert werden und beispielsweise bis zu 80%, vorzugsweise bis zu 60%, pflanzliche Proteine enthalten.

Gegenstand der vorliegenden Erfindung sind auch Futtermittel, enthaltend Krill-Enzym für aquatische Tiere, insbesondere für carnivore Fische. Diese Futtermittel enthalten vorzugsweise einen Anteil von 20-2000 ppm Krill-Enzym mit einer Enzymaktivität von bis zu 500 U/g Trockenmasse (als 1 Unit wird die Menge Krill-Enzym definiert, welche bei 35°C 1 µmol Tyrosin pro Minute freisetzt).

Die folgenden Beispiele dienen der Illustration der Erfindung und stellen in keiner Weise ein Begrenzung dar. In Futtermitteln für Lachs und Forellen kann der Anteil an tierischem Protein durch die Zugabe Krill-Enzym beträchtlich reduziert und durch pflanzliches Protein ersetzt werden. Beispielsweise können folgende Futtermittel hergestellt werden:

### Lachsfuttermittel

| Inhaltsstoffe | ohne Enzyme [%] | mit Enzymen [%] |
|---|---|---|
| Fischmehl | 60.0 | 30.0 |
| Soyaextraktionsschrot | ∼ | 25.0 |
| Molkeprodukt | 12.0 | 12.0 |
| Blutmehl | 10.0 | 15.0 |
| Fischabfälle | 3.0 | 3.0 |
| Geflügelmehl | 1.5 | 1.5 |
| Vit./Spurenelemente. | 1.5 | 1.5 |
| Fischöl | 12.0 | 12.0 |

### Forellenfüttermittel (Starter)

| Inhaltsstoffe | ohne Enzyme [%] | mit Enzymen [%] |
|---|---|---|
| Fischmehl | 50.0 | 25.0 |
| Weizenfuttermehl | 10.0 | 10.0 |
| Soyaextraktionsschrot | 15.0 | 35.0 |
| Blutmehl | 10.0 | 15.0 |
| Vit./Spurenelemente. | 1.0 | 1.0 |
| Fischöl | 12.0 | 12.0 |
| Pelletbinder | 2.0 | 2.0 |

Die in den nachfolgenden Fütterungsversuchen verwendeten experimentellen Futtermittel waren wie folgt zusammengesetzt:

| Zusammensetzung | VG (pflanzlich) % | AN (tierisch) % |
|---|---|---|
| Pflanzliches Proteinmix | 55.0 | 38.5 |
| Soyabohnenmehl | 30.3 | 21.2 |
| Rapssamenmehl | 11.0 | 7.7 |
| Sonnenblumenmehl | 11.0 | 7.7 |
| Estrilvo | 2.7 | 1.9 |
| Isländisches Fischmehl | 27 | 37.3 |
| Nutralys (gekochte Stärke) | 4 | 4 |
| Dorschlebertran | 6 | 5 |
| Soyabohnenoel | 6 | 6 |
| Weizenmehl | - | 7.2 |
| Soyalecithin | 0.5 | 0.5 |
| Vitamin premix | 1 | 1 |
| Mineral premix | 0.5 | 0.5 |

Der effektive Proteingehalt des VG- Futtermittel beträgt 60% pflanzliche und 40% tierische Proteine, während beim AN-Futtermittel die Verhältnisse umgekehrt sind, dh. 40% pflanzliche und 60% tierische Proteine.

### Beispiel 1

Der Fütterungsversuch wurde mit Regenbogenforellen (*Oncorhynchus mykiss*) in 260 l Tanks bei 15°C durchgeführt (Versuchsbeginn 240 Fische, Versuchsende 50 Fische pro Tank). Die Fische hatten ein Initialgewicht von durchschnittlich 2.1 g und wurden 7 Tage pro Woche mit einem Fütterungsautomaten gefüttert. Alle drei Wochen wurden die Fische gewogen. Der Versuch dauerte 198 Tage. Es wurden jeweils 4 Versuche pro Futtermischung durchgeführt. Die Resultate sind in der Tabelle 1 aufgeführt
Die in diesem Versuch verwendeten Futtermittel sind:
VG- Futtermittel (60% pflanzliches und 40% tierisches Protein).
VGE-Futtermittel, enthaltend zusätzlich 2000ppm Krill-Enzym mit einer Aktivität von 50 U/g.
AN-Futtermittel (40 % pflanzliches und 60 % tierisches Protein).
ANE-Futtermittel, enthaltend zusätzlich 2000ppm Krill-Enzym mit einer Aktivität von 50 U/g.
Die Krill-Enzyme wurden nach dem in EP-A-0 393 035 beschriebenen Verfahren isoliert.

**Tabelle 1**

| Gewichtszunahme (g), Tageszunahme (SGR specific growth factor, in %-Körpergewicht/Tag) und Futterumsetzungsrate (FCR food conversion rate, in Futtermenge/g Gewichtszunahme) für Regenbogenforellen über eine Periode von 198 Tagen (4 Versuche pro Futtermittel) | | | |
|---|---|---|---|
| | Gewichtszunahme | SGR | FCR |
| VG | 225.4 | 2.37 | 0.99 |
| VGE | 220.2 | 2.36 | 1.00 |
| AN | 237.5 | 2.40 | 0.98 |
| ANE | 252.0 | 2.43 | 0.96 |

### Beispiel 2

Dieser Fütterungsversuch wurde mit Regenbogenforellen (*Oncorhynchus mykiss*) in 205 l Tanks bei 15°C durchgeführt (Versuchsbeginn 195 Fische, Versuchsende 75 Fische pro Tank). Die Fische hatten ein Initialgewicht von durchschnittlich 0.28 g und wurden 7 Tage pro Woche mit einem Fütterungsautomaten gefüttert. Alle drei Wochen wurden die Fische gewogen. Der Versuch dauerte 101 Tage. Es wurden jeweils 4 Versuche pro Futtermischung durchgeführt. Die Resultate sind in der Tabelle 2 aufgeführt. Die in diesem Versuch verwendeten Futtermittel sind:
VG- Futtermittel (60% pflanzliches und 40% tierisches Protein).
VGE-Futtermittel, enthaltend zusätzlich 2000ppm Krill-Enzym mit einer Aktivität von 300 U/g.
AN-Futtermittel (40 % pflanzliches und 60 % tierisches Protein).
ANE-Futtermittel, enthaltend zusätzlich 2000ppm Krill-Enzym mit einer Aktivität von 300 U/g.
Die Krill-Enzyme wurden nach dem in EP-A-0 393 035 beschriebenen Verfahren isoliert.

**Tabelle 2**

| Gewichtszunahme (g), Tageszunahme (SGR specific growth factor, in %-Körpergewicht/Tag) und Futterumsetzungsrate (FCR food conversion rate, in Futtermenge/g Gewichtszunahme) für Regenbogenforellen über eine Periode von 101 Tagen (4 Versuche pro Futtermittel) | | | |
|---|---|---|---|
| | Gewichtszunahme | SGR | FCR |
| VG | 30.1 | 4.64 | 1.22 |
| VGE | 31.7 | 4.69 | 1.21 |
| AN | 32.9 | 4.73 | 1.16 |
| ANE | 34.0 | 4.76 | 1.19 |

### Beispiel 3

Dieser Fütterungsversuch wurde in 500 l Tanks bei 15°C mit Regenbogenforellen durchgeführt. Die 10 Fische hatten ein durchschnittliches Gewicht von 780 g und wurden *ad libitum* gefüttert.

In der nachstehenden Tabelle 3 ist der scheinbare Verdauungskoeffizient (ADC) von rohem Protein aufgeführt. Die Proteinquellen wurden ohne und mit Zusatz von 2000ppm Krill-Enzym mit einer Aktivität von 300 U/g untersucht.

**Tabelle 3**

| Scheinbarer Verdauungskoeffizient (ADC) von rohem Protein in zwei Versuchsfuttermitteln und in 4 Proteinquellen | | |
|---|---|---|
| Futtermittel (Proteinquelle) | ADC (%) ohne Krill-Enzymzusatz | ADC (%) mit Krill-Enzymzusatz |
| VG | 81.63 | 84.7 |
| AN | 88.7 | 88.3 |
| Fischmehl (Icelandic 70) | 89.4 | 89.2 |
| Soyamehl | 89.7 | 90.4 |
| Rapssamenmehl | 84.2 | 80.8 |
| Sonnenblumenmehl | 81.7 | 82.9 |

### Beispiel 4

Dieser Fütterungsversuch wurde in einem mit Meerwasser gefüllten 60 l Tank bei 18°C mit Seebarschen (*Dicentrarchus labrax*) durchgeführt. Die 20 Fische hatten ein durchschnittliches Gewicht von 780 g und wurden nach einer Woche Adaptationszeit während 5 Tagen überwacht. Die Resultate sind in der Tabelle 4 zusammengefasst.

**Tabelle 4**

| Scheinbarer Verdauungskoeffizient (ADC) von Protein der experimentellen Futtermittel in Seebarsch | | | | |
|---|---|---|---|---|
| Futtermittel | Versuche | | | Mittel ± sd |
| | 1 | 2 | 3 | |
| VG | 91.0 | 92.95 | 93.19 | 92.4 ± 1.2 |
| VGE | 94.37 | 92.61 | 92.05 | 93.0 ± 1.2 |
| AN | 91.84 | 94.25 | 93.35 | 93.2 ± 1.2 |
| ANE | 93.35 | 92.93 | 92.82 | 93.0 ± 0.3 |

### Beispiel 5

Dieser Fütterungsversuch wurde mit Steinbutt (*Scophthalmus maximus)* durchgeführt.

### Futtermittelzusammensetzung

| Inhaltsstoffe | % Trockengew. |
|---|---|
| Fischmehl | 24.7 |
| Weizenmehl | 50 |
| Weizenkleber | 20 |
| Fischöl | 2 |
| Inosine | 0.3 |
| Vitamine | 1.5 |
| Mineralien | 0.5 |
| Chromoxid | 1 |

Es wurden jeweils 2 Wiederholungen pro Behandlung durchgeführt, wobei die Kontrolgruppe obengenanntes Futtermittel erhielt, während die Testgruppe mit obigen Futtermittel enthaltend 500 ppm Krill-Enzym mit einer Aktivität von 300 U/g (isoliert nach dem in EP-A-0 393 035 beschriebenen Verfahren) gefüttert wurde.
Die Versuche wurden wie folgt durchgeführt:
4 mit einem Ueberlaufrohr versehene Aquarien zu 10 l, welche durch ein Rezirkulationsystem kontinuierlich mit Meerwasser gespeist wurden, wobei die Wassertemperatur zwischen 19 und 22°C betrug, wurden mit je 10 Steinbutt (1g) bestückt. Die Fische wurden täglich bis zur Sättigung von Hand gefüttert, wobei die Menge des gegebenen Futtermittels und der Ueberschuss jeweils aufgezeichnet wurde. Die Fische wurden in regelmässigen Abständen gewogen.
In Tabelle 5 ist das Gesamtgewicht der Fische pro Aquarium nach 7, 14, 24, 33 und 41 Tagen aufgeführt.

**Tabelle 5**

| Futtermittel | Tag 0 | Tag 7 | Tag 14 | Tag 24 | Tag 33 | Tag 41 |
|---|---|---|---|---|---|---|
| Ohne Krillenzym Zugabe | | | | | | |
| Kontrolgruppe 1 | 11.62 | 17.09 | 21.29 | 35.95 | 50.44 | 56.75 |
| Kontrolgruppe 2 | 8.73 | 13.32 | 17.19 | 26.74 | 36.07 | 41.7 |

| mit 500 ppm Krillenzym | | | | | | |
|---|---|---|---|---|---|---|
| Gruppe 3 | 10.18 | 14.99 | 2067 | 30.03 | 44.07 | 53.59 |
| Gruppe 4 | 10.1 | 16.24 | 22.29 | 33.6 | 48.2 | 54.72 |

In Tabelle 6 sind die gesamten Gewichtszunahmen der Gruppen 1 und 2 sowie 3 und 4 (jeweils zusammengenommen), die Tageszunahme (SGR specific growth factor, in %-Körpergewicht pro Tag), die Futteraufnahme und daraus berechnete Futterwertung (FCR, Futtermenge/g Gewichtszunahme) aufgeführt.

**Tabelle 6**

| Futtermittel | SGR | Gewichtszunahme | Futteraufnahme | FCR |
|---|---|---|---|---|
| Ohne Krillenzym | 4.32 | 66.16 | 137.0 | 2.07 |
| mit 500 ppm Krilenzym | 4.48 | 71.99 | 123.5 | 1.72 |

## Patentansprüche

1. Verwendung von Krill-Enzymen in Futtermitteln für aquatische Tiere.

2. Verwendung von Krill-Enzymen als Futtermittelzusatz zur Herstellung von Futtermitteln für aquatische Tiere.

3. Verwendung von Krill-Enzymen als Futtermittelzusatz zur Herstellung von Futtermitteln für Forellen.

4. Verwendung von Krill-Enzymen als Futtermittelzusatz zur Herstellung von Futtermitteln für Lachs.

5. Verwendung von Krill-Enzymen als Futtermittelzusatz zur Herstellung von Futtermitteln für Seebarsch.

6. Verwendung von Krill-Enzymen als Futtermittelzusatz zur Herstellung von Futtermitteln für Steinbutt.

7. Futtermittel, enthaltend Krill-Enzym für aquatische Tiere.

8. Futtermittel gemäss Anspruch 7, enthaltend 20-2000ppm Krill-Enzym mit einer Enzymaktivität von bis zu 500 U/g.

9. Futtermittel gemäss Anspruch 8 für carnivore Fische.

10. Futtermittel, gemäss Anspruch 7 oder 8 für Forellen.

11. Futtermittel, gemäss Anspruch 7 oder 8 für Lachs.

12. Futtermittel, gemäss Anspruch 7 oder 8 für Seebarsch.

13. Futtermittel, gemäss Anspruch 7 oder 8 für Steinbutt.
